# FASCICULE DE BREVET EUROPEEN

(11) **EP 1 975 092 B1**
(45) Date de publication et mention de la délivrance du brevet: **09.03.2011**
(21) Numéro de dépôt: 08300151.1
(22) Date de dépôt: 21.03.2008
(51) Int. Cl.: B65G 15/14

(54) **Dispositif de retournement pour chaine de transfert**
Umkehrvorrichtung für eine Transferstraße
Return device for a transfer chain

(30) Priorité: 26.03.2007 FR 0754033
(43) Date de publication de la demande: 01.10.2008
(73) Titulaire: Proditec, 33600 Pessac (FR)
(72) Inventeur: Birague, Frédéric, 33210 Fargues (FR)
(74) Mandataire: Fantin, Laurent

(56) Documents cités:
- JP-A- 60 188 216
- US-A1- 2005 077 150

## Description

La présente invention est relative à un dispositif de retournement destiné à permettre un retournement précis de produits, pharmaceutiques, tels des gélules ou des comprimés selon le préambule de la revendication 1.

La présente invention s'intéresse plus particulièrement aux dispositifs de retournement pour chaîne de transfert conçue à partir de convoyeurs à bandes. Lesdits dispositifs de retournement sont conçus pour retourner un produit, notamment pharmaceutique, d'un angle de rotation déterminé, généralement 180 degrés, d'une première position à une deuxième position afin de permettre la réalisation d'une ou de plusieurs opérations sur les deux faces ou parties de la périphérie de l'objet.

Le retournement d'un produit sur une ligne de production peut être associé à diverses opérations : d'un simple marquage sur deux faces ou parties opposées du produit jusqu'à un contrôle surfacique précis réalisé à l'aide de moyens de contrôle visuel automatisé.

Ainsi, pour divers contrôles ou opérations, les industriels sont à la recherche de dispositifs de retournement assurant leur fonction de manière fiable et précise sans engendrer une diminution des cadences de production en grande série.

Le problème du retournement de produits se pose dans de nombreuses industries : pharmaceutique, automobile, plastique, métallurgie, mais il en est pour lesquelles le retournement d'un produit doit être réalisé de manière extrêmement précise et rapide.

Dans l'industrie pharmaceutique par exemple, on utilise des moyens automatisés de transfert, tels un convoyeur à bandes, et des moyens de contrôle visuel associés avec des moyens de retournement pour pouvoir contrôler la totalité de la périphérie extérieure de tous les produits, tels des comprimés ou des gélules, d'un lot de fabrication avant conditionnement et mise sur le marché.

Les cadences de production et les critères de qualité très exigeants du secteur pharmaceutique font que les dispositifs de retournement destinés à cette industrie ne peuvent souffrir d'aucun défaut de conception susceptible de générer des temps d'arrêt de la ligne de production ou, plus généralement, une diminution du rendement de ladite ligne.

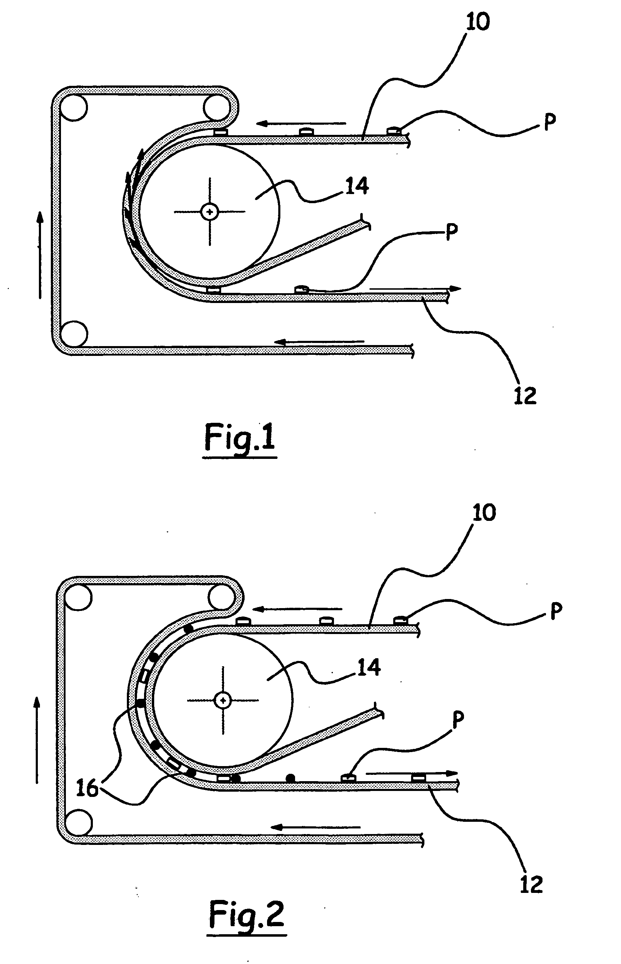

Un dispositif de l'art antérieur tel que celui illustré en figure 1 permet d'assurer rapidement le transfert et le retournement de produits P de petite taille, tels des gélules ou des comprimés, et peut s'intégrer facilement dans une ligne de production de produits pharmaceutiques comprenant des moyens de convoyage à bandes.

Selon la conception de ce premier dispositif de l'art antérieur, les produits P à retourner sont tout d'abord enserrés entre une bande d'entrée 10 et une bande de sortie 12. Puis, la superposition de la bande d'entrée 10, du ou des produits P et de la bande de sortie 12 est inversée par rotation autour d'une roue 14. Les produits P se retrouvent donc retournés sur la bande de sortie 12 qui peut être utilisée comme moyens de convoyage desdits produits P retournés vers un autre poste de la ligne de production.

Cependant, cette première conception de l'art antérieur souffre de quelques inconvénients.

Pour tenir compte de l'épaisseur des produits P à retourner, la vitesse de la bande de sortie 12 doit être supérieure à la vitesse de la bande d'entrée 10.

Cependant, comme illustré sur la figure 1, lorsque les produits P n'arrivent pas régulièrement, notamment lors du démarrage ou de l'arrêt d'un lot de fabrication, la bande de sortie 12 se retrouve en contact avec la bande d'entrée 10, ce qui provoque des frottements entre la bande de sortie 12 et la bande d'entrée 10 et donc des variations de vitesse intempestives desdites bandes.

Les variations de vitesse des bandes de sortie 12 et d'entrée 10, assimilables à des saccades, peuvent ainsi se reproduire à chaque fois que des produits P ne séparent plus les deux bandes.

Lesdites saccades sont susceptibles de perturber la régularité d'espacement entre les produits P, voire de faire chuter lesdits produits P desdites bandes.

Mais surtout, ces saccades sont susceptibles de gêner la réalisation des opérations, telles que le marquage ou le contrôle surfacique réalisé à l'aide de moyens de contrôle visuel automatisé, des produits P lorsqu'ils circulent sur les bandes d'entrée 10 et de sortie 12.

Plus particulièrement, on peut citer le cas de figure dans lequel un contrôle surfacique desdits produits P, circulant sur les bandes d'entrée 10 et de sortie 12, est effectué avant et après retournement de manière à inspecter deux faces desdits produits. Les moyens de contrôle visuel automatisé sont généralement reliés à des moyens d'éjection permettant de rejeter les produits présentant des défauts. En cas de saccades desdites bandes d'entrée 10 et de sortie 12, les vitesses et donc le temps de parcours de chaque produit P entre les moyens de contrôle visuel automatisé et les moyens d'éjection n'est pas constant. Etant donné les vitesses élevées pouvant être atteintes par lesdites bandes, un léger décalage induit par une saccade peut entraîner un non rejet du produit P défectueux ou un rejet d'un autre produit P non défectueux, les moyens d'éjection étant paramétrés en fonction de la vitesse des bandes d'entrée 10 et de sortie 12.

Afin de remédier à ces problèmes, un second dispositif de l'art antérieur propose l'utilisation de picots 16 pour éviter que les bandes de sortie 12 et d'entrée 10 n'entrent en contact l'une avec l'autre.

Comme illustré en figure 2, cette deuxième solution de l'art antérieur prévoit de disposer des picots 16 statiques d'écartement en contact avec les bords de la bande de sortie 12, lesdits picots 16 permettant de maintenir ladite bande de sortie 12 écartée de la bande d'entrée 10 lors de leur retournement par rotation autour de la roue 14.

Cependant, les picots 16 statiques provoquent nécessairement une usure de la bande de sortie 12 en raison d'importants frottements. Même en abaissant leur nombre au minimum, l'usure provoquée par les picots 16 statiques d'écartement demeure significative et oblige à remplacer régulièrement la bande de sortie 12.

Une alternative à cette deuxième solution de l'art antérieur peut consister à monter les picots 16 libres à rotation autour de leur axe support. Cependant, cette conception ne peut être retenue car, étant donné les vitesses atteintes par la bande sortie 12, les picots 16 atteindraient des vitesses de rotation très élevées nécessitant des liaisons mécaniquement très précises et résistantes, qui seraient trop coûteuses et difficiles à entretenir.

Le document US-2005/077150 A divulgue un dispositif de retournement pour chaîne de transfert de produits selon le préambule de la revendication 1, et un poste d'une ligne de production selon le préambule de la revendication 11.

Aussi, la présente invention vise à pallier les inconvénients de l'art antérieur en proposant un dispositif de retournement à bandes de produits P, notamment de produits P pharmaceutiques, susceptible de permettre la réalisation du retournement de grandes séries de produits P de façon rapide et fiable pour une application à des lignes de production d'industries très exigeantes, telle l'industrie pharmaceutique. Le dispositif de retournement selon l'invention permet de garantir des vitesses de bandes stabilisées durant un cycle de production, et donc des espacements réguliers entre les produits P nécessaires au bon déroulement des opérations menées par d'autres dispositifs sur les produits P circulant sur lesdites bandes dudit dispositif de retournement.

A cet effet, l'invention a pour objet un dispositif de retournement pour chaîne de transfert de produits P, selon la revendication 1.

Les moyens de guidage du dispositif selon l'invention permettent la séparation de la bande de sortie et de la bande d'entrée avec un minimum de frottements lorsqu'il n'y a pas de produits P pour les maintenir écartées, évitant ainsi toute variation de vitesse ou saccade desdites bandes.

Le dispositif de retournement selon l'invention est aussi facilement intégrable à un poste d'une ligne de production selon la revendication 11.

D'autres caractéristiques et avantages ressortiront de la description qui va suivre de l'invention, description donnée à titre d'exemple uniquement, en regard des dessins annexés sur lesquels :
- la figure 1 est un schéma illustrant un premier dispositif de retournement de l'art antérieur,
- la figure 2 est un schéma illustrant un second dispositif de retournement selon l'art antérieur,
- la figure 3 est un schéma représentant un dispositif de retournement selon l'invention,
- la figure 4 est une coupe transversale d'un dispositif de retournement selon l'invention,
- la figure 5 est une vue en éclaté illustrant l'assemblage de deux jantes et de deux flasques sur une roue de retournement,
- la figure 6 est une figure illustrant une variante de réalisation d'un dispositif de retournement selon l'invention,
- la figure 7 est une vue d'un poste d'une ligne de production utilisant un dispositif de retournement selon l'invention.

La présente invention se rapporte à un dispositif 18 de retournement particulièrement adapté pour être intégré à une chaîne de transfert de produits P, notamment des produits pharmaceutiques tels des comprimés ou des gélules. L'industrie pharmaceutique est une des plus exigeantes en terme de cadence de production et de fiabilité des différents dispositifs constituant ses lignes de fabrication, le dispositif 18 de retournement selon l'invention se propose donc de répondre à ces exigences par une conception simple mais dont la cinématique est optimisée pour conférer audit dispositif 18 un fonctionnement sûr et stable sur de nombreux cycles de fabrication.

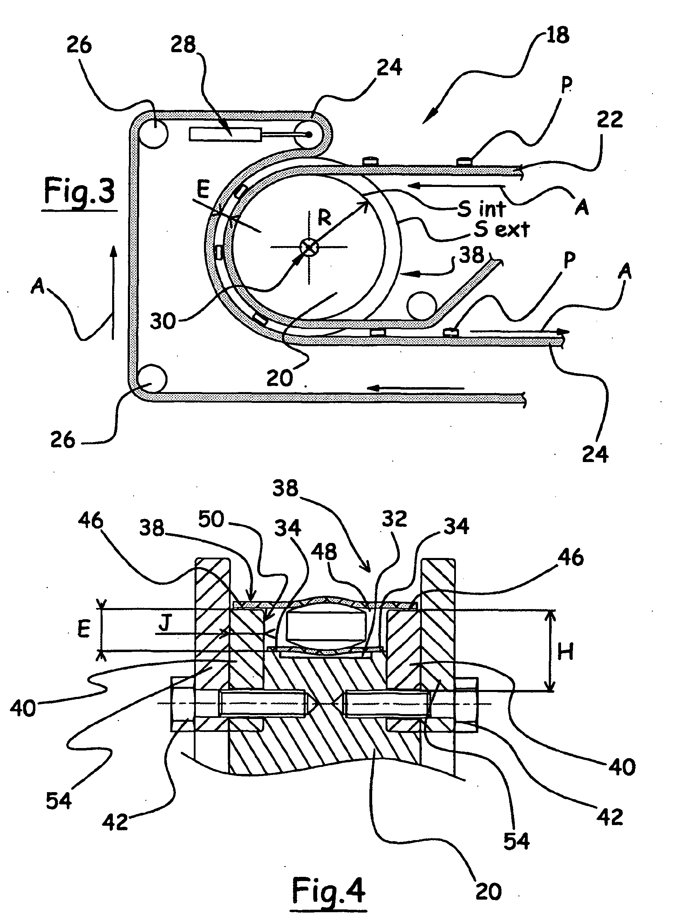

A cet effet, comme illustré en figure 3, un dispositif 18 de retournement selon l'invention comprend au moins une roue de retournement 20 et au moins deux bandes 22, 24 enserrant les produits P à retourner, au moins une bande d'entrée 22 et au moins une bande de sortie 24 se déplaçant respectivement à une vitesse Vint et Vext, Vint étant différente de Vext, sous l'effet de moyens d'entraînement appropriés.

Pour donner un ordre d'idées, un dispositif 18 de retournement selon l'invention est susceptible de travailler à une cadence supérieure à trente produits P par seconde tout en évitant les variations de vitesse des bandes d'entrée 22 et de sortie 24 constatées avec les dispositifs de l'art antérieur.

Les bandes d'entrée 22 et de sortie 24 d'un dispositif 18 de retournement selon l'invention sont des bandes continues. A cet effet, des galets de renvoi 26 permettent de créer des circuits fermés, au moins un circuit pour la bande d'entrée et au moins un circuit pour la bande de sortie, sur lesquels peuvent circuler de manière continue lesdites bandes d'entrée et de sortie.

Des moyens de mise en tension 28 desdites bandes, généralement employés par l'homme du métier sur les dispositifs de convoyage à bande, peuvent être prévus afin d'assurer une mise en tension ajustable pour chacune desdites bandes.

Les produits P, notamment des produits pharmaceutiques, sont amenés sur ladite bande d'entrée par des premiers moyens de convoyage situés en amont du dispositif 18 de retournement selon l'invention.

Avantageusement, ladite bande d'entrée 22 peut être utilisée comme premiers moyens de convoyage d'un poste de la ligne de fabrication intégrant un dispositif 18 de retournement selon l'invention, auquel cas les produits P sont distribués sur ladite bande d'entrée et répartis à intervalles sensiblement réguliers par des moyens de distribution et des moyens de répartition connus de l'homme du métier.

La bande d'entrée 22 se déplace à une vitesse Vint dépendant de la cadence des premiers moyens de convoyage ou du débit d'alimentation en produits P fournis en amont du dispositif 18 de retournement.

Le retournement des produits P, notamment des produits pharmaceutiques, est obtenu par la mise en rotation desdits produits P enserrés entre les bandes d'entrée 22 et de sortie 24 autour d'un axe 30 dit de retournement sensiblement perpendiculaire au sens d'avancement A, illustré par des flèches sur la figure 3, desdites bandes.

Afin d'être retournée par rotation autour de l'axe de retournement 30, la bande d'entrée 22 est guidée à sa vitesse Vint par au moins une surface de guidage Sint de la roue de retournement 20.

La surface Sint peut être une surface continue ou discontinue, c'est-à-dire fournissant un guidage continu ou discontinu de la bande d'entrée lors de son retournement par rotation autour de l'axe de retournement 30.

Selon le mode de réalisation préféré de l'invention, la surface de guidage Sint comprend un dégagement central 32 de manière à ce que la bande d'entrée repose uniquement sur deux portées 34 extérieures et cylindriques situées sensiblement de part et d'autre de la surface cylindrique extérieure de la roue de retournement 20.

Selon le mode de réalisation préféré de l'invention, cette surface de guidage Sint appartient à la roue de retournement 20 et se trouve être la surface cylindrique extérieure de ladite roue. La largeur de la surface de guidage Sint de la bande d'entrée 22 dépend donc sensiblement de la largeur de la roue de retournement 20.

Toujours selon un mode de réalisation préféré de l'invention, la bande d'entrée est entraînée à sa vitesse Vint par la surface de guidage Sint de la roue de retournement 20. La surface Sint, étant donc utilisée en tant que surface d'entraînement, est réalisée dans un matériau et/ou des formes susceptibles de fournir une adhérence suffisante avec la bande d'entrée 22 pour transmettre le couple d'entraînement transmis par des moyens d'entraînement, notamment motorisés et asservis, à la roue de retournement 20. Eventuellement, un revêtement, notamment élastomère, peut venir équiper la surface de guidage Sint pour améliorer l'adhérence avec la bande d'entrée 22.

Afin de maintenir les produits P, notamment pharmaceutiques, durant leur retournement par rotation et d'assurer leur récupération pour les évacuer par la suite vers des seconds moyens de convoyage d'un poste d'une ligne de fabrication intégrant un dispositif 18 de retournement selon l'invention, ou, directement vers des moyens d'évacuation situés en aval du dispositif de retournement selon l'invention, ledit dispositif de retournement 18 comprend au moins une bande de sortie 24 se déplaçant à une vitesse Vext et enserrant les produits P à retourner avec la bande d'entrée 22.

La vitesse Vext de la bande de sortie 24 est différente de la vitesse Vint de la bande d'entrée 22 étant donné l'écartement E nécessaire pour enserrer les produits P entre lesdites bandes lors du retournement par rotation.

Ainsi, la vitesse Vext de la bande de sortie 24 est sensiblement définie par l'épaisseur des produits P, le rayon R de la roue de retournement 20, la vitesse Vint de la bande d'entrée et ainsi que par la souplesse desdites bandes d'entrée et de sortie.

Pour obtenir un entraînement optimal de la bande de sortie 24 permettant d'éviter les variations de vitesse et les saccades constatées avec les dispositifs de retournement de l'art antérieur, il est nécessaire de maintenir ladite bande de sortie 24 écartée de la bande d'entrée et, de préférence, en guidant ladite bande de sortie 24 à la vitesse Vext déterminée par les paramètres énoncés ci-dessus.

Pour guider de manière optimale, c'est-à-dire sans glissement, la bande de sortie 24 à la vitesse Vext lors de son retournement par rotation autour de l'axe de retournement 30, le dispositif 18 de retournement selon l'invention dispose de moyens de guidage 38 comprenant au moins une surface de guidage Sext à la vitesse Vext de la bande de sortie 24.

La surface Sext peut être une surface continue ou discontinue, c'est-à-dire fournissant un guidage continu ou discontinu de la bande de sortie lors de son retournement par rotation autour de l'axe de retournement.

Ainsi, la surface Sext peut être discontinue en étant réalisée à partir de plusieurs secteurs angulaires distants les uns des autres et formant de manière discrète une surface sensiblement cylindrique et correspondant à ladite surface Sext. De manière avantageuse, en jouant sur la position desdits secteurs angulaires par rapport à l'axe de retournement 30, il devient possible de faire varier le diamètre de la surface Sext pour s'adapter aux différents formats de produits P à retourner.

Afin de guider avec le minimum de frottement possible la bande de sortie 24 à la vitesse Vext, la surface Sext se déplace aussi à la vitesse Vext.

Pour ce faire, la surface de guidage Sext est en rotation synchrone avec la roue de retournement 20 autour de l'axe de retournement 30 et se trouve à une distance sensiblement définie par l'épaisseur des produits P, le rayon R de la roue de retournement 20, la vitesse Vint de la bande d'entrée 22 et ainsi que par la souplesse desdites bandes d'entrée 22 et de sortie 24.

Selon un mode de réalisation préféré de l'invention, l'écartement E entre les bandes d'entrée 22 et de sortie 24, soit l'écartement entre les surfaces de guidage intérieure Sint et extérieure Sext, fourni par les moyens de guidage 38 est sensiblement inférieur à l'épaisseur des produits P à retourner. En effet, afin de mieux maintenir les produits P par enserrement et d'éviter de les détériorer durant ledit retournement, lesdites bandes d'entrée 22 et de sortie 24 sont de préférence en un matériau souple, notamment tissé et enduit d'élastomère, susceptible de se déformer légèrement, comme illustré en figure 4.

La, au moins une, surface de guidage Sext des moyens de guidage 38 peut être portée par la roue de retournement 20.

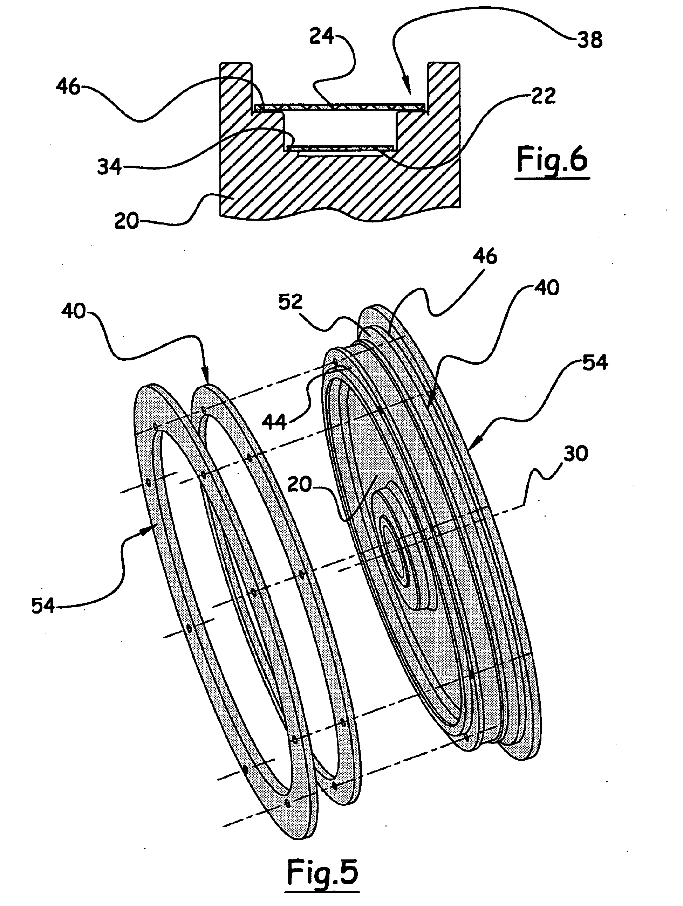

Plus précisément, ladite, au moins une, surface de guidage Sext est réalisée par au moins une jante 40 rapportée par des moyens de fixation 42 appropriés, tels des vis, sur la roue de retournement 20. Plus particulièrement, la jante est rapportée sur ladite roue 20 au niveau d'un épaulement 44, illustré en figure 5, permettant un positionnement précis par centrage.

Une jante 40 est de forme annulaire, de hauteur H adaptée aux produits P à retourner et d'épaisseur J suffisante pour guider la bande de sortie, la partie cylindrique extérieure de ladite jante 40 formant une portée 46 cylindrique utilisée pour la réalisation de la surface Sext de guidage de la bande de sortie.

L'ajustement du diamètre de la portée 46 cylindrique, soit de la hauteur H d'une jante 40, permet de faire varier aisément l'écartement E entre les bandes d'entrée et de sortie : il suffit d'avoir un jeu de jantes adapté aux différentes épaisseurs des produits P à retourner, les moyens de fixation 42 autorisant un montage et un démontage rapide d'une jante 40.

Selon un mode de réalisation préféré d'un dispositif 18 de retournement selon l'invention, notamment illustré en figures 4 et 5, la surface de guidage Sext est réalisée par au moins deux jantes 40 rapportées de part et d'autre de la roue de retournement 20 et libérant un passage 48 vers la surface de guidage Sint de largeur sensiblement égale à la largeur de la bande d'entrée. Ainsi, au moins deux portées 46 permettant le guidage de la bande de sortie 24 sont créées de part et d'autre de la surface Sint de la roue de retournement 20, soit de part et d'autre de la bande d'entrée 22. Ainsi, de la même manière que le permet le dégagement central 32 de la surface de guidage Sint vis-à-vis de la bande d'entrée 22, le passage 48 libéré permet à la bande de sortie 24 de se déformer légèrement afin de mieux maintenir et de ne pas détériorer les produits P.

Avantageusement, le dispositif 18 de retournement selon l'invention comprend des moyens anti-échappement 50 des bandes d'entrée et de sortie, lesdits moyens anti-échappement 50 empêchant lesdites bandes d'entrée et de sortie de quitter leurs surfaces de guidage, respectivement Sint et Sext.

Toujours selon un mode de réalisation préféré de l'invention, les moyens anti-échappement 50 de la bande d'entrée 22 sont réalisés par la paroi intérieure 52 des jantes 40 situées de part et d'autre de la bande d'entrée 22, et, les moyens anti-échappement 50 de la bande de sortie 24 sont réalisés par l'intermédiaire de flasques 54, un flasque 54 rapporté sur chacune des jantes 40.

Selon un mode de réalisation préféré de l'invention, la bande de sortie 24 est seulement guidée à sa vitesse Vext par la surface de guidage Sext, l'entraînement de ladite bande de sortie 24 étant effectué par un autre élément de réalisation du circuit fermé de ladite bande, comme par exemple un galet presseur.

Selon un autre mode de réalisation de l'invention, la surface Sext entraîne la bande de sortie 24 à sa vitesse Vext. La surface Sext, utilisée en tant que surface d'entraînement, peut donc être réalisée dans un matériau et/ou des formes susceptibles de fournir une adhérence suffisante avec la bande de sortie 24 pour transmettre le couple d'entraînement transmis par des moyens d'entraînement, notamment motorisés et asservis, à la roue de retournement 20. Eventuellement, un revêtement, notamment élastomère, peut venir équiper la surface de guidage Sext pour améliorer l'adhérence avec la bande de sortie 24.

Selon un mode de réalisation préféré de l'invention, la bande de sortie 24 est nécessairement plus large que la bande d'entrée 22.

Il est évident que l'invention couvre aussi la variante de réalisation d'un dispositif 18 de retournement, illustrée sur la figure 6, dont la roue de retournement 20, la ou les jantes 40, et le ou les flasques 54 ne forment qu'un seul et unique élément, notamment obtenu par un usinage dans la masse ou venu de moulage. Dans cette variante, les portées 46 cylindriques appartiennent à la roue 20.

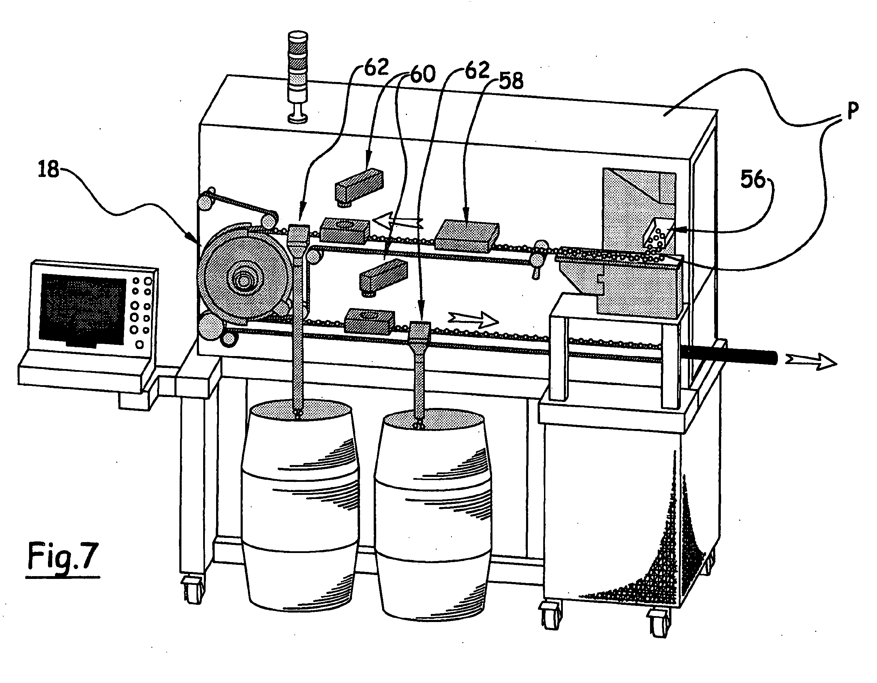

Comme l'illustre la figure 7, un dispositif de retournement selon l'invention est facilement intégrable à un poste d'une ligne de production et permet de limiter l'encombrement dudit poste en favorisant la compacité de son agencement.

Le poste représenté en figure 7 est un poste de contrôle de la qualité des produits P avant conditionnement et mise sur le marché.

Ce poste comprend des moyens de distribution 56 et des moyens de répartition 58 à intervalles réguliers des produits P sur la bande d'entrée 22 utilisée comme premiers moyens de convoyage dudit poste de contrôle.

Des premiers moyens de contrôle visuels 60 inspectent une première face ou partie des produits P et sont en association avec des premiers moyens d'évacuation 62 afin d'évacuer les produits P présentant des défauts. Puis, après retournement desdits produits P grâce à un dispositif de retournement 18 selon l'invention, les produits P retournés sont convoyés par la bande de sortie 24 dudit dispositif de retournement vers des seconds moyens de contrôle visuel 60 associés avec des seconds moyens d'évacuation 62.

Utilisée comme seconds moyens de convoyage du poste de production, la bande de sortie 24 peut être utilisée pour amener les produits P contrôlés vers des moyens de stockage ou un autre poste de la ligne de production.

L'application d'un dispositif 18 de retournement décrite ci-dessus n'est qu'un exemple destiné à illustrer les capacités d'intégration du dispositif selon l'invention à un poste d'une ligne de production, tout autre application d'un dispositif 18 de retournement est bien entendu couverte par l'invention.

## Revendications

1. Dispositif (18) de retournement pour chaîne de transfert de produits (P), tels des gélules ou des comprimés pharmaceutiques, comprenant au moins une roue de retournement (20) disposant d'une surface de guidage Sint, ladite roue (20) étant montée à rotation autour d'un axe (30) dit de retournement et au moins deux bandes (22,24) transférant les produits (P) à retourner, au moins une bande d'entrée (22) guidée par la surface Sint et se déplaçant à une vitesse Vint et au moins une bande de sortie (24) se déplaçant à une vitesse Vext, ledit dispositif de retournement disposant de moyens de guidage (38) comprenant au moins une surface de guidage Sext à la vitesse Vext de la bande de sortie (24), **caractérisé en ce que** lesdites deux bandes (22,24) enserrent les produits (P) à retourner et la vitesse Vint est différente de la vitesse Vext.

2. Dispositif (18) de retournement pour chaîne de transfert de produits (P) selon la revendication 1, **caractérisé en ce que** la, au moins une, surface de guidage Sint de la roue de retournement (20) et la, au moins une surface de guidage Sext des moyens de guidage (38) peuvent être des surfaces continues ou discontinues.

3. Dispositif (18) de retournement pour chaîne de transfert de produits (P) selon la revendication 1 ou 2 **caractérisé en ce que** la au moins une surface de guidage Sext des moyens de guidage (38) est en rotation synchrone avec la roue de retournement (20) autour de l'axe retournement (30).

4. Dispositif (18) de retournement pour chaîne de transfert de produits (P) selon la revendication 1, 2 ou 3, **caractérisé en ce que** la, au moins une, surface de guidage Sext des moyens de guidage (38) est portée par la roue de retournement (20).

5. Dispositif (18) de retournement pour chaîne de transfert de produits (P) selon la revendication 4, **caractérisé en ce que** la, au moins une surface de guidage Sext est réalisée par au moins une jante (40) rapportée sur la roue de retournement (20).

6. Dispositif (18) de retournement pour chaîne de transfert de produits (P) selon la revendication 5, **caractérisé en ce que** la jante (40) est de hauteur (H) adaptée aux produits (P) à retourner et d'épaisseur (J) suffisante pour guider la bande de sortie (24).

7. Dispositif (18) de retournement pour chaîne de transfert de produits (P) selon la revendication 5 ou 6, **caractérisé en ce que** la au moins une, surface de guidage Sext est réalisée par au moins deux jantes (40), rapportées de part et d'autre de la surface Sint de la roue de retournement (20), créant au moins deux portées (46) cylindriques de guidage de la bande de sortie (24).

8. Dispositif (18) de retournement pour chaîne de transfert de produits (P) selon la revendication 7, **caractérisé en ce qu'**il comprend des moyens anti-échappement (50) des bandes d'entrée (22) et de sortie (24), les moyens anti-échappement (50) de la bande d'entrée (22) sont réalisés par la paroi intérieure (52) des jantes (40) situées de part et d'autre de la surface Sint, et, les moyens anti-échappement (50) de la bande de sortie (24) sont réalisés par l'intermédiaire de flasques (54), un flasque (54) rapporté sur chacune des jantes (40).

9. Dispositif (18) de retournement pour chaîne de transfert de produits (P) selon l'une des revendications précédentes **caractérisé en ce que** les surfaces de guidage Sint et Sext sont utilisées comme surfaces d'entraînement, respectivement, des bandes d'entrée (22) et de sortie (24).

10. Dispositif (18) de retournement pour chaîne de transfert de produits (P) selon l'une des revendications 7 à 9, **caractérisé en ce que** la surface de guidage Sint comprend un dégagement central (32) et **en ce que** les deux jantes (40) situées de part et d'autre de la surface Sint libèrent un passage (48) permettant respectivement aux bandes d'entrée (22) et de sortie (24) de se déformer légèrement afin de mieux maintenir et de ne pas détériorer les produits (P).

11. Poste d'une ligne de production comprenant une chaîne de transfert de produits (P), **caractérisé en ce que** ladite chaîne de transfert de produits intègre un dispositif (18) de retournement salon l'une des revendications précédentes.

## Claims

1. Turnaround device (18) for a transfer line of products (P), such as pharmaceutical tablets or capsules, comprising at least one turnaround wheel (20) that uses a guide surface Sint, whereby said wheel (20) is mounted so as to rotate around a so-called turnaround axis (30) and at least two belts clamp transferring the products (P) that are to be turned around, at least one input belt (22) guided by the surface Sint and moving at a speed Vint, and at least one output belt (24) moving at a speed Vext, said turnaround device using guide means (38) that comprise at least one guide surface Sext at the speed Vext of the output belt (24), **characterized in that** said two belts (22,24) clamp the products (P) that are to be turned around and the speed Vint is different from the speed Vext.

2. Turnaround device (18) for a transfer line of products (P) according to claim 1, wherein the at least one guide surface Sint of the turnaround wheel (20) and the at least one guide surface Sext of the guide means (38) can be continuous or intermittent surfaces.

3. Turnaround device (18) for a transfer line of products (P) according to claim 1 or 2, wherein the at least one guide surface Sext of the guide means (38) is in synchronous rotation with the turnaround wheel (20) around the turnaround axis (30).

4. Turnaround device (18) for a transfer line of products (P) according to claim 1, 2 or 3, wherein the at least one guide surface Sext of the guide means (38) is carried by the turnaround wheel (20).

5. Turnaround device (18) for a transfer line of products (P) according to claim 4, wherein the at least one guide surface Sext is produced by at least one wheel rim (40) that is added onto the turnaround wheel (20).

6. Turnaround device (18) for a transfer line of products (P) according to claim 5, wherein the wheel rim (40) has a height (H) that is suitable for products (P) that are to be turned around and a thickness (J) that is adequate for guiding the output belt (24).

7. Turnaround device (18) for a transfer line of products (P) according to claim 5 or 6, wherein the at least one guide surface Sext is produced by at least two wheel rims (40), added onto both sides of the surface Sint of the turnaround wheel (20), creating at least two cylindrical bearings (46) for guiding the output belt (24).

8. Turnaround device (18) for a transfer line of products (P) according to claim 7, wherein it comprises anti-escape means (50) of the input belts (22) and output belts (24), the anti-escape means (50) of the input belt (22) are provided by the inside wall (52) of the wheel rims (40) that are located on both sides of the surface Sint, and the anti-escape means (50) of the output belt (24) are provided by means of the flanges (54), one flange (54) added onto each of the wheel rims (40).

9. Turnaround device (18) for a transfer line of products (P) according to one of the preceding claims, wherein the guide surfaces Sint and Sext are used as driving surfaces, respectively, of the input belts (22) and output belts (24).

10. Turnaround device (18) for a transfer line of products (P) according to one of claims 7 to 9, wherein the guide surface Sint comprises a central release (32) and wherein the two wheel rims (40) that are located on both sides of the surface Sint free up a passage (48) that allows respectively the input belts (22) and the output belts (24) to deform slightly so as to better hold the products (P) without damaging them.

11. Station on a production line that comprises a transfer line of products (P), **characterized in that** said transfer line integrates a turnaround device (18) according to one of the preceding claims.

## Patentansprüche

1. Wendevorrichtung (18) für eine Transferstraße für Produkte (P), wie pharmazeutische Kapseln oder Tabletten, umfassend wenigstens ein Wenderad (20), das über eine Führungsfläche Sint verfügt, wobei das Rad (20) um eine sogenannte Wendeachse (30) drehbar angebracht ist, sowie wenigstens zwei Bänder (22, 24), die die zu wendenden Produkte (P) transportieren, wenigstens ein Eintrittsband (22), das über die Fläche Sint geführt wird und sich mit einer Geschwindigkeit Vint bewegt, und wenigstens ein Austrittsband (24), das sich mit einer Geschwindigkeit Vext bewegt, wobei die Wendevorrichtung über Führungsmittel (38) verfügt, die wenigstens eine Fläche Sext zum Führen des Austrittsbandes (24) mit der Geschwindigkeit Vext umfassen, **dadurch gekennzeichnet, dass** die beiden Bänder (22, 24) die zu wendenden Produkte (P) einklemmen und dass sich die Geschwindigkeit Vint von der Geschwindigkeit Vext unterscheidet.

2. Wendevorrichtung (18) für eine Transferstraße für Produkte (P) nach Anspruch 1, **dadurch gekennzeichnet, dass** die wenigstens eine Führungsfläche Sint des Wenderades (20) und die wenigstens eine Führungsfläche Sext der Führungsmittel (38) durchgehende oder unterbrochene Flächen sein können.

3. Wendevorrichtung (18) für eine Transferstraße für Produkte (P) nach Anspruch 1 oder 2, **dadurch gekennzeichnet, dass** die wenigstens eine Führungsfläche Sext der Führungsmittel (38) sich mit dem Wenderad (20) um die Wendeachse (30) synchron dreht.

4. Wendevorrichtung (18) für eine Transferstraße für Produkte (P) nach Anspruch 1, 2 oder 3, **dadurch gekennzeichnet, dass** die wenigstens eine Führungsfläche Sext der Führungsmittel (38) von dem Wenderad (20) getragen wird.

5. Wendevorrichtung (18) für eine Transferstraße für Produkte (P) nach Anspruch 4, **dadurch gekennzeichnet, dass** die wenigstens eine Führungsfläche Sext von wenigstens einer an das Wenderad (20) angesetzten Felge (40) gebildet ist.

6. Wendevorrichtung (18) für eine Transferstraße für Produkte (P) nach Anspruch 5, **dadurch gekennzeichnet, dass** die Felge (40) eine den zu wendenden Produkten (P) angepasste Höhe (H) und eine zum Führen des Austrittsbandes (24) ausreichende Dicke (J) aufweist.

7. Wendevorrichtung (18) für eine Transferstraße für Produkte (P) nach Anspruch 5 oder 6, **dadurch gekennzeichnet, dass** die wenigstens eine Führungsfläche Sext von wenigstens zwei, auf beiden Seiten der Fläche Sint des Wenderades (20) angesetzten Felgen (40), die wenigstens zwei zylindrische Auflageflächen (46) zum Führen des Austrittsbandes (24) bilden, gebildet ist.

8. Wendevorrichtung (18) für eine Transferstraße für Produkte (P) nach Anspruch 7, **dadurch gekennzeichnet, dass** sie Mittel zum Verhindern des Entgleitens (50) des Eintrittsbandes (22) und des Austrittsbandes (24) umfasst, die Mittel zum Verhindern des Entgleitens (50) des Eintrittsbandes (22) durch die Innenwand (52) der beiderseits der Fläche Sint befindlichen Felgen (40) gebildet sind und die Mittel zum Verhindern des Entgleitens (50) des Austrittsbandes (24) mit Hilfe von Flanschen (54) gebildet sind, wobei ein Flansch (54) an jede der Felgen (40) angesetzt ist.

9. Wendevorrichtung (18) für eine Transferstraße für Produkte (P) nach einem der vorhergehenden Ansprüche, **dadurch gekennzeichnet, dass** die Führungsflächen Sint und Sext als Antriebsflächen des Eintrittsbandes (22) bzw. des Austrittsbandes (24) verwendet werden.

10. Wendevorrichtung (18) für eine Transferstraße für Produkte (P) nach einem der Ansprüche 7 bis 9, **dadurch gekennzeichnet, dass** die Führungsfläche Sint einen mittleren Freiraum (32) aufweist und dass die beiden, auf beiden Seiten der Fläche Sint gelegenen Felgen (40) einen Durchgang (48) freigeben, der dem Eintrittsband (22) bzw. dem Austrittsband (24) ermöglicht, sich geringfügig zu verformen, um die Produkte (P) besser zu halten und sie nicht zu beschädigen.

11. Station einer Produktionslinie, die eine Transferstraße für Produkte (P) umfasst, **dadurch gekennzeichnet, dass** die Produkttransferstraße eine Wendevorrichtung (18) nach einem der vorhergehenden Ansprüche enthält.
